# EUROPEAN PATENT SPECIFICATION

(11) **EP 2 479 090 B1**
(45) Date of publication and mention of the grant of the patent: **01.07.2015**
(21) Application number: 12151833.6
(22) Date of filing: 19.01.2012
(51) Int. Cl.: B62J 17/02, B62J 17/04, B62J 6/02

(54) **Front part structure of a saddle-ride-type vehicle**
Vorderteilstruktur eines Sattelfahrzeugs
Structure de pièce avant de véhicule de type à selle

(30) Priority: 21.01.2011 JP 2011010776
(43) Date of publication of application: 25.07.2012
(73) Proprietor: Honda Motor Co., Ltd., Tokyo 107-8556 (JP)
(72) Inventor: Tsutsui, Noriyoshi, Saitama, 351-0193 (JP); Okabe, Sadataka, Saitama, 351-0193 (JP); Yokoyama, Shin, Saitama, 351-0193 (JP)
(74) Representative: Ilgart, Jean-Christophe

(56) References cited:
- JP-A- 2005 035 526
- JP-U- S5 945 182
- JP-U- S5 989 787

## Description

### [Technical Field]

The present invention relates to a front part structure of a saddle-ride-type vehicle where a folded portion which is folded rearwardly is formed on a lower portion of a screen which is arranged adjacent to an upper edge of a headlight, and a panel member is arranged adjacent to an upper side of the folded portion. Conventional front part structures of saddle-ride-type vehicles are known from JPS5989787U and JPS5945182U.

### [Background Art]

Conventional front part structure are known from JP 559 89787U and JP 559 45182U.

### [Background Art]

With respect to a motorcycle, there has been disclosed the constitution where a folded portion which is folded rearwardly is formed on a lower portion of a screen (wind screen) which is arranged adjacent to an upper edge of a headlight, and a panel member is arranged adjacent to an upper side of the folded portion. As this type of vehicle, there has been known a vehicle where a folded portion of a screen is engaged between a lens upper surface portion of a headlight and a rib which is arranged above the lens upper surface portion of the headlight with a gap therebetween (see patent document 1, for example, on which the preamble of independent claim 1 is based).

### [Prior Art Document]

[Patent Document 1] JP-A-2005-35526

### [Summary of the Invention]

### [Problems that the Invention is to solve]

In the conventional constitution, the large gap is formed between the folded portion of the screen and the lower end of the panel member and hence, the internal structure is viewed from a front side.

Further, there may be a case where the mere use of the pushing structure where the folded portion of the screen is engaged between the lens upper surface portion of the headlight and the rib which is arranged above the lens upper surface portion of the headlight with a gap therebetween cannot generate a sufficient screen supporting force.

To enhance the external appearance and the screen supporting force, it may be possible to adopt the structure where the lower end of the panel member is extended downwardly, and the folded portion of the screen is pushed by the lower end of the panel member. This structure, however, gives rise to a situation where water which enters between the panel member and the screen is hardly drained.

The present invention has been made in view of the above-mentioned circumstances, and it is an object of the present invention to provide a front part structure of a saddle-ride-type vehicle which can enhance a screen supporting force by a panel member, can improve external appearance of a mating portion between the screen and the panel member, and can easily drain water which enters between the panel member and the screen.

### [Means for solving the Problem]

To overcome the above-mentioned drawbacks, according to the present invention, there is provided a front part structure of a saddle-ride-type vehicle where the front part structure includes a headlight (51) where a light body (63) is housed between a lens

(61) and a housing (62) and a screen (52) which is arranged adjacent to an upper edge of the headlight (51), a folded portion (52B) which is folded rearwardly is formed on a lower portion of the screen (52), and a panel member (53) is arranged above and adjacent to the folded portion (52B), wherein a lower edge of the panel member (53) is brought into contact with the folded portion (52B) of the screen (52), and a water drain passage (71) which is communicated with a gap formed between the screen (52) and the panel member (53) is formed in the folded portion (52B).

Due to such a constitution, the lower edge of the panel member (53) which is arranged above and adjacent to the folded portion (52B) is brought into contact with the folded portion (52B) of the screen (52) and, at the same time, the water drain passage (71) which is communicated with the gap formed between the screen (52) and the panel member (53) is also formed in the folded portion (52B) and hence, a screen supporting force can be enhanced by the panel member, the external appearance of the mating portion between the screen and the panel member can be improved, and water which enters between the panel member and the screen can be easily drained.

In the above-mentioned constitution, the folded portion (52B) of the screen (52) may be engaged between a lens upper surface portion (61A) of the headlight (51) and an engaging portion (61G) which is arranged above the lens upper surface portion (61A) of the headlight (51) with a gap therebetween, and the water drain passage (71) may be formed adjacent to a portion of the folded portion (52B) which is engaged between the lens upper surface portion (61A) and the engaging portion (61G). Due to such a constitution, water drain property at the engaging portion between the screen and the headlight where water drainage is particularly difficult can be enhanced.

Also in the above-mentioned constitution, the screen (52) may include a pair of left and right folded portions (52B1), and a center portion of the lower edge of the panel member (53) may be formed into an upwardly curved shape between the pair of left and right folded portions (52B1) thus forming an upwardly projecting opening portion (73) which allows a space in front of the panel member (53) and a space behind the panel member (53) to be communicated with each other. Due to such a constitution, water drain property can be further enhanced by the upwardly projecting opening portion while preventing the engaging portion between the screen and the headlight from being viewed from the outside.

Also in the above-mentioned constitution, the saddle-ride-type vehicle may include a side stand (30), and the water drain passage (71) may be formed at a lowest portion of the gap formed between the screen (52) and the panel member (53) in a state where the side stand (30) is used. Due to such a constitution, water can be efficiently drained in a parking state where the side stand is used.

Also in the above-mentioned constitution, the lens upper surface portion (61A) may include a horizontal upper surface portion (61B) which is arranged horizontally in the vehicle widthwise direction in a state where the saddle-ride-type vehicle assumes an upright state, and left and right inclined upper surface portions (61C) which are inclined upwardly from left and right sides of the horizontal upper surface portion (61B), and the water drain passage (71) may be provided on boundaries between the horizontal upper surface portion (61B) and the inclined upper surface portions (61C). Due to such a constitution, water can be efficiently drained either in a state where the saddle-ride-type vehicle assumes an upright state and a state where the saddle-ride-type vehicle assumes a leftwardly or rightwardly inclined state.

Further, in the above-mentioned constitution, the water drain passage (71) may be formed of a through hole which vertically penetrates the folded portion (52B) in a state where an end of the through hole arranged directly below the gap formed between the screen (52) and the panel member (53) is set as a front end of the through hole. Due to such a constitution, it is possible to prevent the water drain passage from being exposed to a front surface of the screen.

Further, in the above-mentioned constitution, a lower portion of the panel member (53) may have a strip-shaped bulging portion (53B) which bulges frontwardly along the lower edge of the screen (52). Due to such a constitution, rigidity of the panel member which pushes the screen can be enhanced thus supporting the screen more firmly.

### [Advantage of the Invention]

According to the present invention, the lower edge of the panel member which is arranged above and adjacent to the folded portion is brought into contact with the folded portion of the screen and, at the same time, the water drain passage which is communicated with the gap formed between the screen and the panel member is formed in the folded portion and hence, a screen supporting force can be enhanced by the panel member, an external appearance of the mating portion between the screen and the panel member can be improved, and water which enters between the panel member and the screen can be easily drained.

Further, the folded portion of the screen is engaged between the lens upper surface portion of the headlight and the engaging portion which is arranged above the lens upper surface portion of the headlight with a gap therebetween, and the water drain passage is formed adjacent to a portion of the folded portion which is engaged between the lens upper surface portion and the engaging portion and hence, water drain property at the engaging portion between the screen and the headlight where water drainage becomes particularly difficult can be further enhanced.

Further, the screen includes the pair of left and right folded portions, and the center portion of the lower edge of the panel member is formed into an upwardly curved shape between the pair of left and right folded portions thus forming the upwardly projecting opening portion which allows the space in front of the panel member and the space behind the panel member to be communicated with each other and hence, water drain property can be enhanced by the upwardly projecting opening portion while preventing the engaging portion between the screen and the headlight from being viewed from the outside.

Further, the saddle-ride-type vehicle includes the side stand, and the water drain passage is formed at the lowest portion of the gap formed between the screen and the panel member in a state where the side stand is used and hence, water can be efficiently drained in a parking state where the side stand is used.

Further, the lens upper surface portion includes the horizontal upper surface portion which is arranged horizontally in the vehicle widthwise direction in a state where the saddle-ride-type vehicle assumes an upright state, and left and right inclined upper surface portions which are inclined upwardly from the left and right sides of the horizontal upper surface portion, and the water drain passage is provided on the boundaries between the horizontal upper surface portion and the inclined upper surface portions and hence, water can be efficiently drained either in a state where the saddle-ride-type vehicle assumes an upright state and a state where the saddle-ride-type vehicle assumes a leftwardly or rightwardly inclined state.

Further, the water drain passage is formed of the through hole which vertically penetrates the folded portion in a state where a portion of the through hole directly below the gap formed between the screen and the panel member is set as a front end of the through hole and hence, it is possible to prevent the water drain passage from being exposed to a front surface of the screen.

Further, the lower portion of the panel member has a strip-shaped bulging portion which bulges frontwardly along the lower edge of the screen and hence, rigidity of the panel member which pushes the screen can be enhanced thus supporting the screen more firmly.

### [Brief Description of Drawings]

[Fig. 1] A left side view of a motorcycle according to an embodiment of the present invention.
[Fig. 2] A side view of a front portion of the motorcycle.
[Fig. 3] A front view of the front portion of the motorcycle.
[Fig. 4] A view showing a state where front cowls are removed from the front portion shown in Fig. 3.
[Fig. 5] A view showing a screen together with a screen back-side panel as viewed from below.
[Fig. 6] A front view showing a mating portion of a headlight, a screen and a screen back-side panel in an enlarged manner.
[Fig. 7] A view showing a state where the screen back-side panel is removed from the mating structure shown in Fig. 6.
[Fig. 8] A cross-sectional view taken along a line A-A in Fig. 6.
[Fig. 9] A cross-sectional view taken along a line B-B in Fig. 6.
[Fig. 10] A cross-sectional view taken along a line C-C in Fig. 6.
[Fig. 11] A cross-sectional view taken along a line D-D in Fig. 6.
[Fig. 12] A cross-sectional view taken along a line E-E in Fig. 6.

### [Mode for Carrying out the Invention]

Hereinafter, an embodiment of the present invention is explained in conjunction with drawings. In the explanation made hereinafter, assume that the directions of frontward, rearward, leftward, rightward, upward and downward are, unless otherwise specified, equal to the directions of a vehicle body.

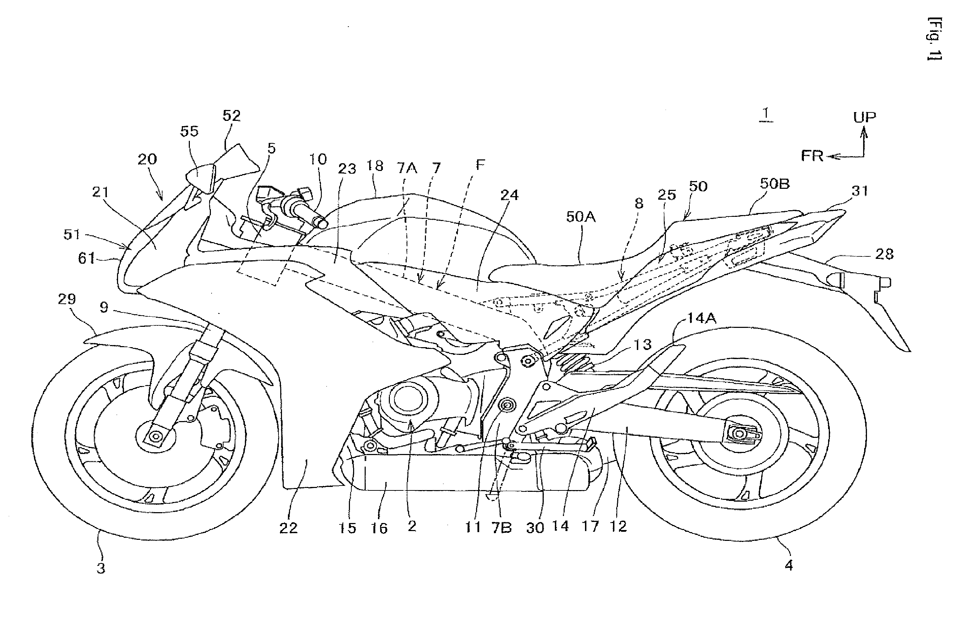

Fig. 1 is a left side view of a motorcycle according to the embodiment of the present invention. In the drawings, symbol FR indicates the frontward direction of the vehicle body, symbol UP indicates the upward direction of the vehicle body, and symbol R indicates the rightward direction of the vehicle body.

The motorcycle 1 is a saddle-ride-type vehicle where an engine 2 is mounted on an approximately center portion of a vehicle in the longitudinal direction of the vehicle, a front wheel 3 is arranged in front of the engine 2, and a rear wheel 4 is arranged behind the engine 2.

A vehicle body frame F includes a head pipe 5 which is mounted on a front portion of the vehicle body, a pair of left and right main frames 7 which extends rearwardly and downwardly from the head pipe 5, and a seat rail 8 which extends rearwardly and upwardly in the rearward direction toward a rear portion of the vehicle body from rear portions of the main frames 7.

Each main frame 7 includes a main tube 7A which extends rearwardly and downwardly from a rear portion of the head pipe 5, and a center tube 7B which is bent from a rear end of the main tube 7A and extends downwardly.

A pair of left and right front forks 9 is supported on the head pipe 5 by way of a steering shaft (not shown in the drawing) in a laterally steerable manner, and the front wheel 3 is rotatably supported on lower portions of the front forks 9. A steering handle 10 is mounted on upper portions of the front forks 9.

A swing arm 12 is swingably supported on the center tube 7B by means of a pivot shaft 11 which extends in the vehicle widthwise direction, and the rear wheel 4 is supported on a rear portion of the swing arm 12. A rear suspension 13 extends between the swing arm 12 and the main frames 7. A pair of left and right pillion step stays 14 for supporting pillion steps 14A is mounted on rear portions of the center tubes 7B respectively. Further, a side stand 30 which enables parking of the motorcycle 1 in a leftwardly-inclined state is rotatably mounted on a lower portion of the left center tube 7B.

The engine 2 is supported below the main frames 7. The engine 2 is a water-cooled-type in-line four-cylinder engine, wherein four exhaust pipes 15 which respectively extend from corresponding cylinders extend below the engine 2, and are connected to a box-shaped chamber 16 which is arranged below the engine 2. A muffler 17 which is arranged on a right side of the rear wheel 4 is connected to a rear portion of the chamber 16. The rear wheel 4 is driven by a chain (not shown in the drawing) which is extended between and wounded around an output shaft of the engine 2 and the rear wheel 4.

A fuel tank 18 is supported on upper portions of the main tubes 7A, and a seat 50 on which a rider sits is contiguously formed with a rear portion of the fuel tank 18, extends rearwardly, and is supported on the seat rail 8. The seat 50 is formed into an integral seat where a front seat 50A on which a rider sits and a rear seat 50B on which a pillion sits are formed into a continuous integral body in the longitudinal direction of the vehicle.

The motorcycle 1 includes a resin-made vehicle body cover 20. The vehicle body cover 20 includes a front cowl 21 which covers a front portion of the vehicle body frame F, front side cowls 22 which are contiguously formed with the front cowl 21, extend rearwardly and downwardly, and cover a front portion of the engine 2, upper cowls 23 which are arranged above the front side cowls 22, middle cowls 24 which are contiguously formed with the upper cowls 23 and cover a lower portion of the fuel tank 18, rear cowls 25 which are contiguously formed with the middle cowls 24 and cover side portions of the seat rail 8, and a tail cowl 31 which is contiguously formed with rear portions of the rear cowls 25. The front cowls 21, the front side cowls 22, the upper cowls 23, the middle cowls 24 and the rear cowls 25 are provided in left-and-right pairs.

A rear fender 28 which covers the rear wheel 4 from above is mounted on lower surfaces of the rear portions of the rear cowls 25. Further, a front fender 29 is mounted on the front forks 9.

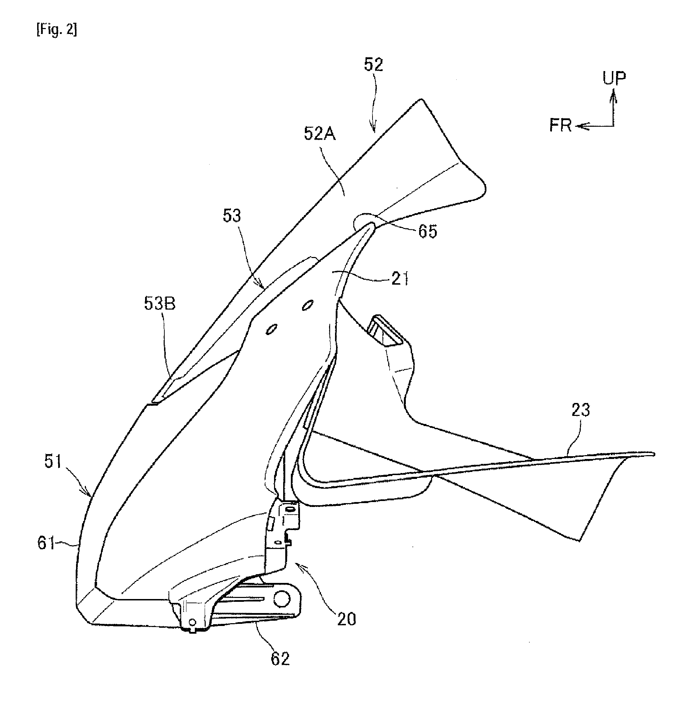

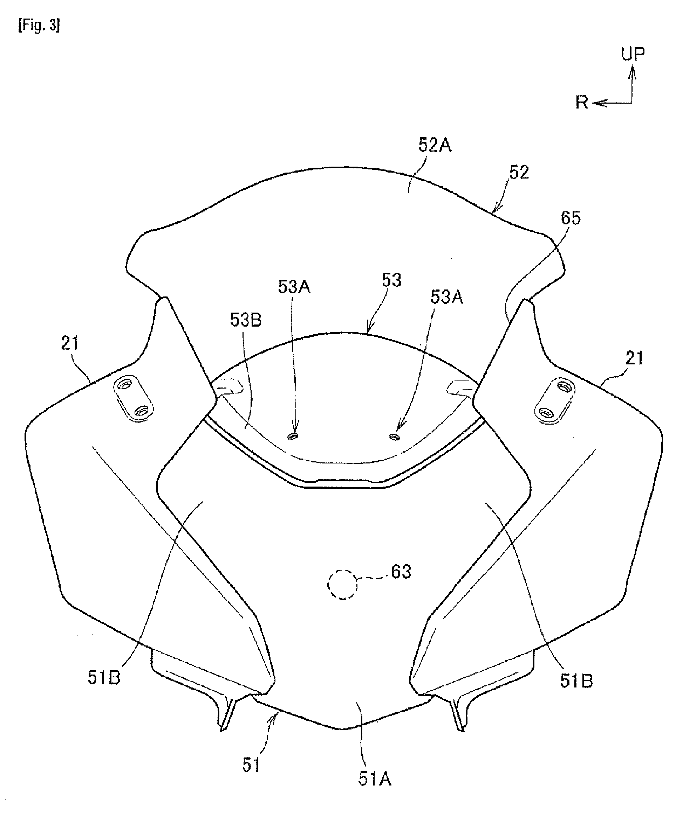

Fig. 2 is a side view of a front portion of the motorcycle 1, and Fig. 3 is a front view of the front portion of the motorcycle 1.

As shown in Fig. 2 and Fig. 3, the front portion of the motorcycle 1 includes: a headlight 51 which is arranged at the center in the vehicle widthwise direction; a wind screen (hereinafter referred to as a screen) 52 which is arranged above the headlight 51; the front cowls 21 which are arranged on left and right sides of the headlight 51; and a screen back-side panel (panel member) 53 which is arranged on the back of the screen 52. These members constitute a windshield device which covers a front portion of an upper half part of a rider.

The headlight 51 is arranged in front of the head pipe 5 by way of a stay not shown in the drawing, and is formed into a light unit having a Y shape as viewed in a front view (see Fig. 3) and having a tapered bullet shape as viewed in a side view (see Fig. 2).

To be more specific, as shown in Fig. 3, the headlight 51 is arranged such that the center of the headlight 51 in the widthwise direction is aligned with the center of the vehicle in the widthwise direction. The headlight 51 is formed as an integral body constituted of a longitudinally-elongated center light portion 51A which extends vertically at the center of the headlight 51 in the widthwise direction, and a pair of left and right outer light portions 51B which extends obliquely in the rearward and upward direction toward the outside in the lateral direction from the center light portion 51A. Light emitting surfaces of the center light portion 51A and the outer light portions 51B are formed of an integral lens 61. The lens 61 is mounted on a box-shaped housing 62 (see Fig. 2) which constitutes a light bulb housing portion of the center light portion 51A and the outer light portions 51B. In Fig. 3, symbol 63 indicates a light bulb (light body).

As shown in Fig. 2, a front surface of the lens 61, front surfaces of the front cowls 21 and a front surface of the screen 52 form a continuous surface having no stepped portions thus realizing the flushing of surfaces (surface flushing) of the windshield device.

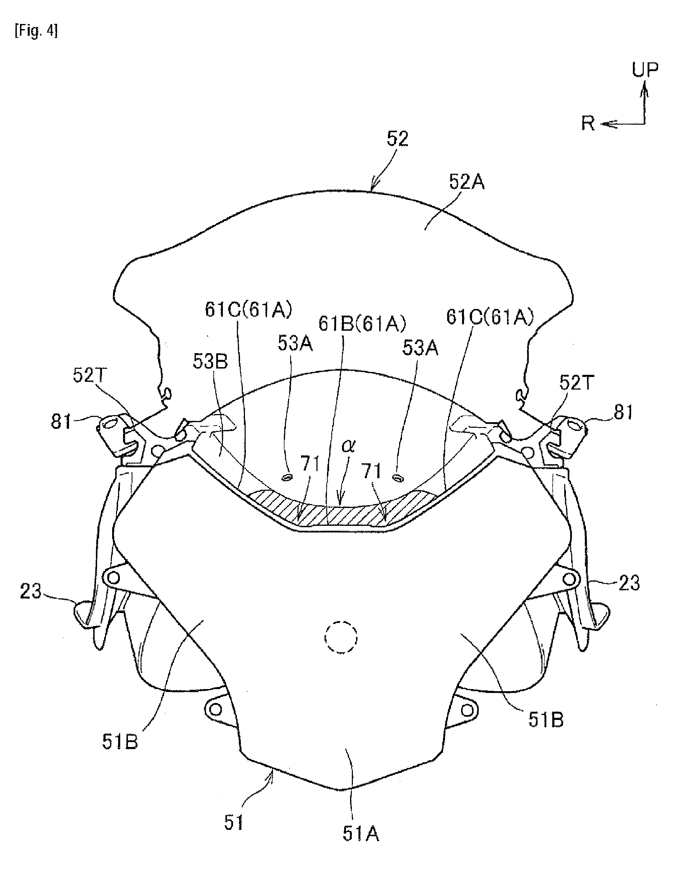

As shown in Fig. 3, an opening portion 65 having a U shape as viewed in a front view is formed above the lens 61 and the pair of left and right front cowls 21, and the screen 52 is mounted so as to cover the U-shaped opening portion 65. Fig. 4 is a view showing a state where the front cowls 21 are removed from the structure shown in Fig. 3.

The screen 52 is made of a colorless or softly-colored transparent material. As shown in Fig. 4, the screen 52 has fastening portions 52T on both left and right sides thereof, and is fixed by fastening the respective fastening portions 52T to the pair of left and right screen support stays 81. Besides the fastening portions 52T of the screen 52, the front cowls 21 and rear view mirrors 55 (see Fig. 1) are also fixed to the screen support stays 81 together with the fastening portions 52T.

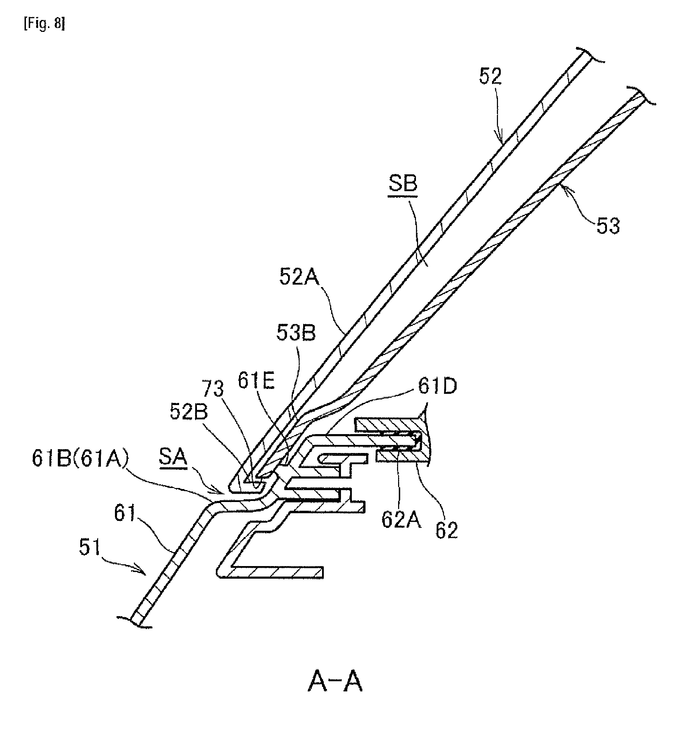

A lower edge of the screen 52 is formed into a shape which follows a lens upper surface portion 61A of the headlight 51, and is mounted adjacent to the lens upper surface portion 61A. Here, a slight gap (a gap SA shown in Fig. 8 or the like described later) is formed between the lower edge of the screen 52 and the lens upper surface portion 61A, and the gap SA constitutes a discharge passage through which water which passes a water drain passage 71 described later is discharged to the outside of the vehicle.

The lens upper surface portion 61A is constituted of a horizontal upper surface portion 61B which extends horizontally in the vehicle widthwise direction in a state where the motorcycle 1 assumes an upright posture, and inclined upper surface portions 61C which are inclined upwardly from left and right sides of the horizontal upper surface portion 61B. The horizontal upper surface portion 61B corresponds to a lens upper surface portion of the center light portion 51A, and the inclined upper surface portions 61C correspond to lens upper surface portions of the outer light portions 51B.

The screen back-side panel 53 is made of a nontransparent material, and is integrally formed with the pair of left and right screen support stays 81. A meter unit (not shown in the drawing) having instruments for providing various kinds of information to the rider is arranged behind the screen back-side panel 53, and the screen back-side panel 53 also functions as a meter cover.

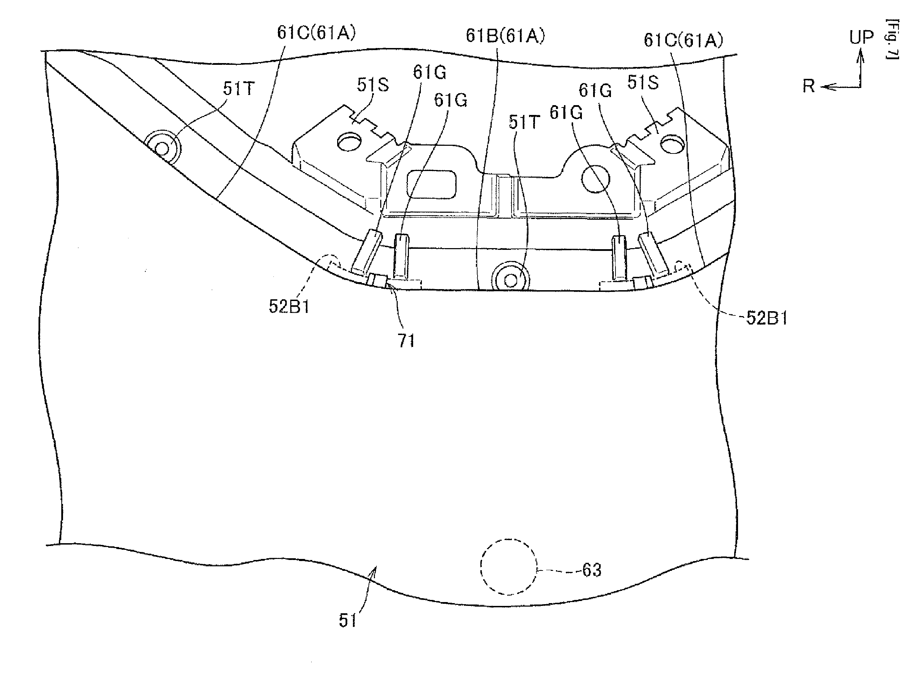

Further, in the drawing, symbol 53A indicates a pair of left and right fastening holes formed in the screen back-side panel 53, and stays 51S (see Fig. 7 described later) mounted on the headlight 51 are fixed to the screen back-side panel 53 by means of these fastening holes 53A.

The upper cowls 23 are also shown in Fig. 2 and Fig. 4. The upper cowls 23 may be integrally formed with the screen back-side panel 53 and the screen support stays 81, or may be formed as separate members.

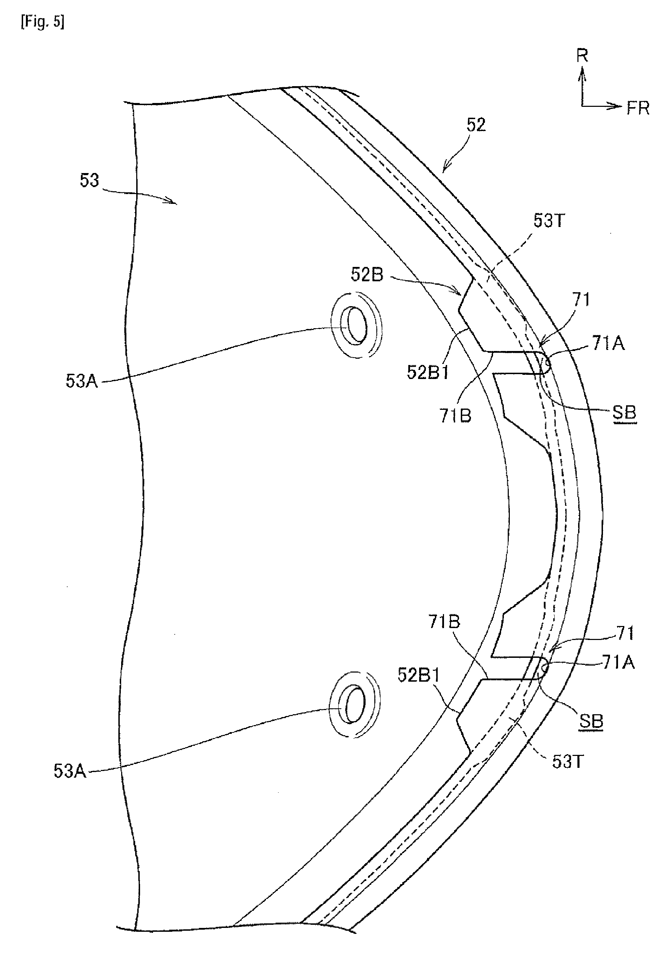

Fig. 5 is a view showing the screen 52 together with the screen back-side panel 53 as viewed from below. The screen 52 includes a screen body 52A (see Fig. 4) which is raised upwardly from the lens upper surface portion 61A of the headlight 51 and a folded portion 52B which is folded rearwardly along a lower edge of the screen body 52A as integral parts thereof.

When the screen 52 is mounted on the pair of left and right screen support stays 81, as shown in Fig. 5, the approximately whole lower edge of the screen back-side panel 53 is brought into contact with the folded portion 52B. Due to such a constitution, the screen 52 is pushed downwardly by the screen back-side panel 53 and hence, the vertical movement of the screen 52 can be suppressed.

Further, as shown in Fig. 5, a pair of left and right projecting portions (screen pushing portions) 53T which projects frontwardly is formed on the screen back-side panel 53 and, when the screen 52 is mounted on the screen back-side panel 53, a back surface of the screen body 52A is brought into contact with the respective projecting portions 53T. Due to such a constitution, the screen 52 is pushed by the screen back-side panel 53 from a rear side and hence, the rearward movement of the screen 52 due to an influence of a traveling wind can also be suppressed more firmly.

That is, the screen back-side panel 53 functions also as a pushing member which suppress the vertical and longitudinal movement of the screen 52 thus enhancing a force for supporting the screen 52.

Here, a gap SB is formed between the screen back-side panel 53 and the screen body 52A except for portions of the lower end of the screen back-side panel 53 (projecting portions 53T). Due to such a constitution, there is no possibility of rubbing between the screen back-side panel 53 and the screen body 52A and hence, it is possible to avoid the adhesion of shaved debris generated by such rubbing to the screen body 52A.

In this constitution, as shown in Fig. 5, the folded portion 52B of the screen 52 has a pair of left and right large-sized folded portions 52B1 which extends longer than other parts of the folded portion 52B in the rearward direction.

The large-sized folded portions 52B1 are arranged at positions where the large-sized folded portions 52B1 overlap the pair of left and right projecting portions 53T of the screen back-side panel 53 as viewed in a bottom plan view, and the large-sized folded portions 52B1 extend longer than the projecting portions 53T in the vehicle widthwise direction toward the center in the vehicle widthwise direction. Due to such a constitution, an area in which the screen back-side panel 53 pushes the screen 52 downwardly is increased and hence, a force for vertically pushing the screen 52 can be increased by an amount corresponding to the increase of the area of the screen back-side panel 53. Further, the screen back-side panel 53 can push the screen 52 vertically and longitudinally at the substantially same positions as the screen 52, the movement of the screen 52 in the respective directions can be efficiently suppressed.

Next, the mating structure of the headlight 51, the screen 52 and the screen back-side panel 53 is explained.

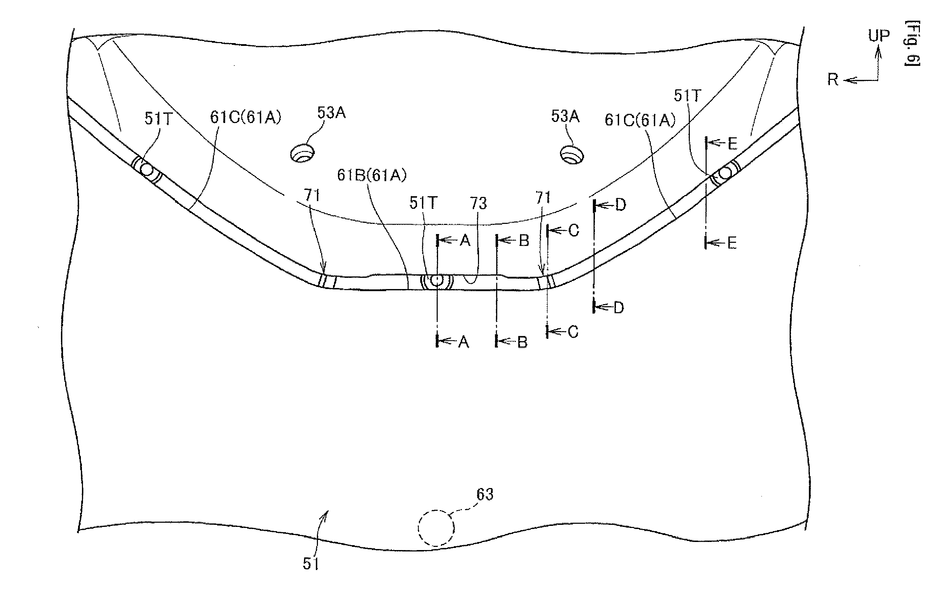

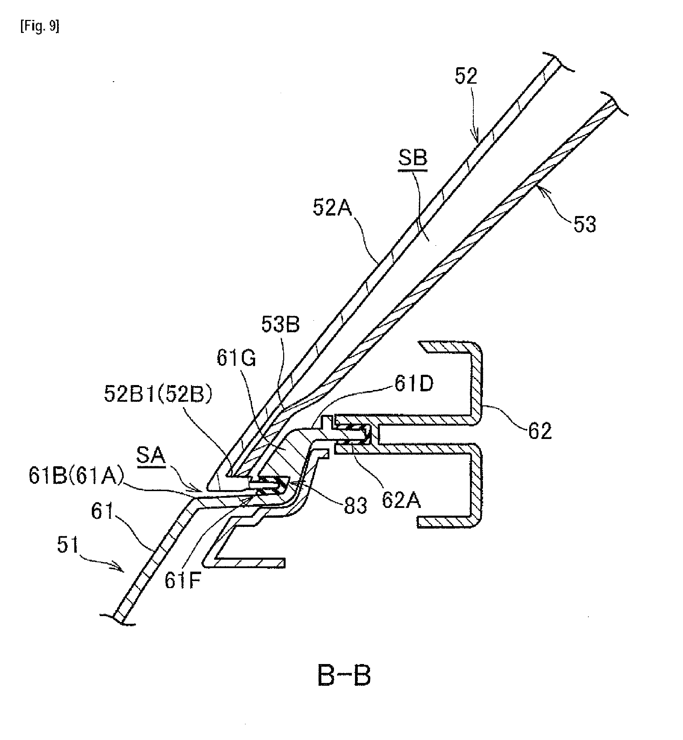

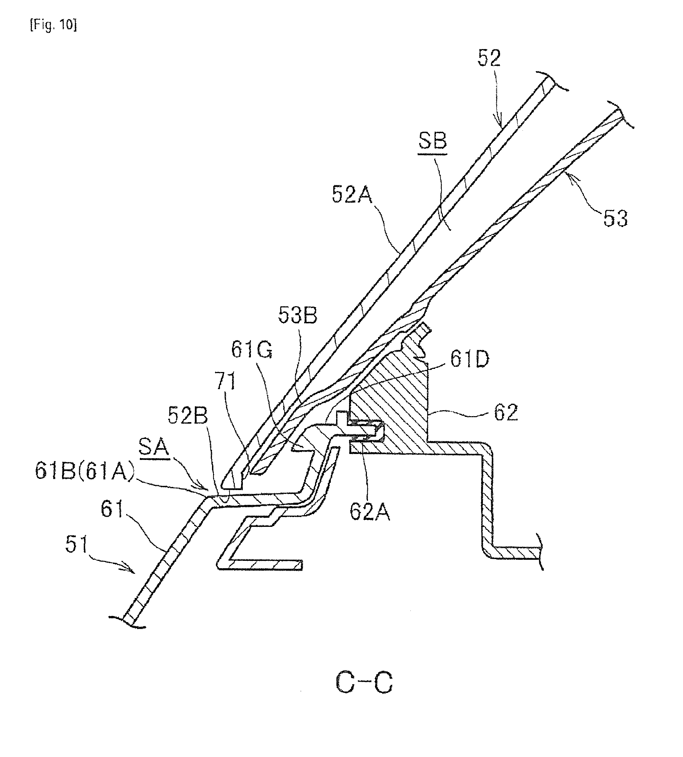

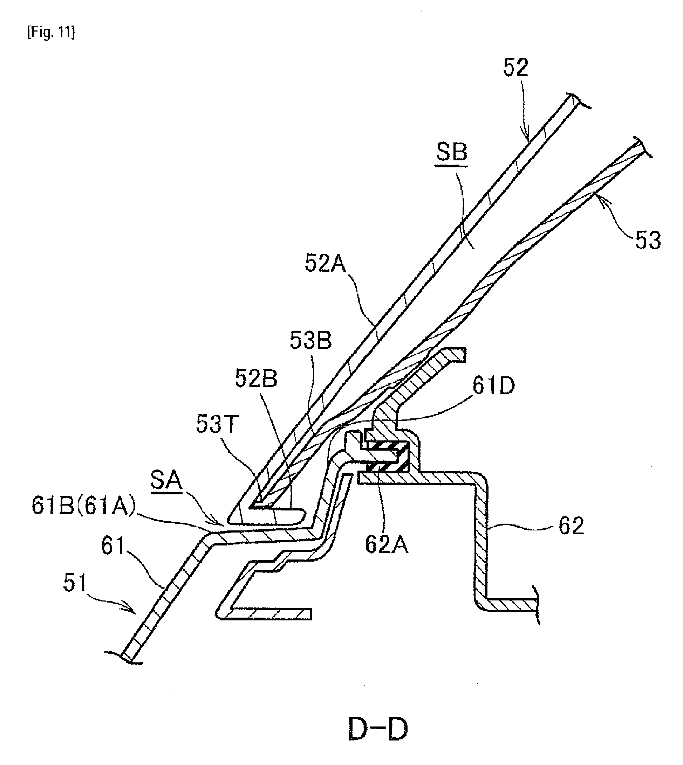

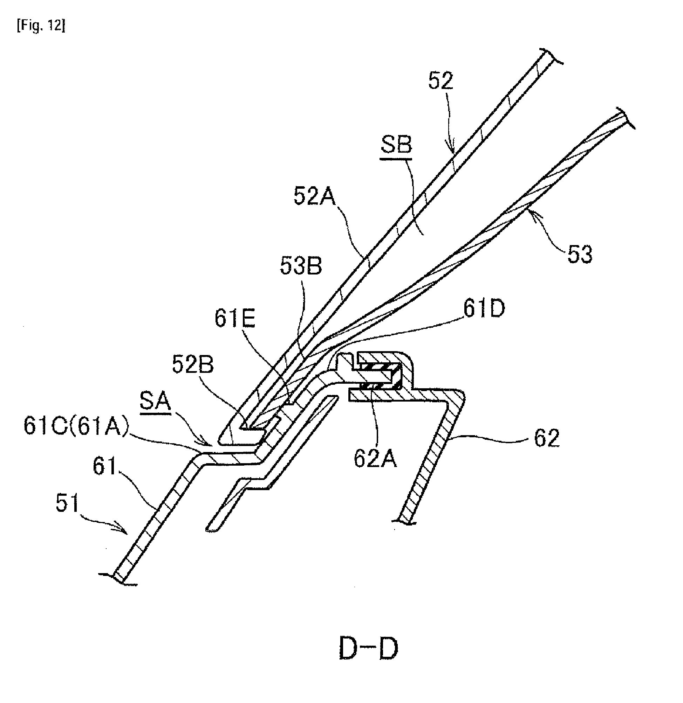

Fig. 6 is a front view showing a mating portion of the headlight 51, the screen 52 and the screen back-side panel 53 in an enlarged manner, and Fig. 7 is a view showing a state where the screen back-side panel 53 is removed from the mating structure shown in Fig. 6. Further, Fig. 8 shows a cross section (cross section at the center in the vehicle widthwise direction) of the mating structure taken along a line A-A in Fig. 6, Fig. 9 shows a cross section of the mating structure taken along a line B-B in Fig. 6, Fig. 10 shows a cross section of the mating structure taken along a line C-C in Fig. 6, Fig. 11 shows a cross section of the mating structure taken along a line D-D in Fig. 6, and Fig. 12 shows a cross section of the mating structure taken along a line E-E in Fig. 6.

As described above, in the constitution, the lower edge of the screen back-side panel 53 is brought into contact with the folded portion 52B of the screen 52 and hence, as shown in Fig. 6, a large gap is not formed between the screen back-side panel 53 and the screen 52 as viewed in a front view. Accordingly, the exposure of portions which extend toward an outer peripheral portion of the headlight 51 ("fastening portions 51T for fastening the lens 61 to the housing 62", "stays 51S of the headlight 51" and the like shown in Fig. 7) to the outside can be suppressed by the screen back-side panel 53 thus avoiding a state where the appearance of the motorcycle 1 is deteriorated.

As shown in Fig. 8 to Fig. 12, a flange portion 61D which extends rearwardly and upwardly along a back surface of the screen back-side panel 53 is arranged behind the lens upper surface portion 61A of the lens 61 as an integral part of the lens 61, and the housing 62 is mounted on a back side of the flange portion 61D.

The flange portion 61D includes a panel pushing portion 61E which projects frontwardly and is brought into contact with the back surface of the screen back-side panel 53 (see Fig. 8 and Fig. 12) and a recessed engaging portion 61F with which the folded portion 52B of the screen 52 is engaged (see Fig. 9). The recessed engaging portion 61F is constituted of the lens upper surface portion 61A and a plurality of ribs (engaging portions) 61G which are arranged above the lens upper surface portion 61A in a spaced-apart manner. As shown in Fig. 7, the plurality of ribs 61G are arranged such that two ribs 61G which are spaced apart from each other are arranged on each of left and right sides. Further, the respective ribs 61G are arranged at positions corresponding to the large-sized folded portions 52B1 of the folded portion 52B of the screen 52. That is, the large-sized folded portions 52B1 of the screen 52 constitute portions to be engaged which are engaged with the recessed engaging portion 61F.

In the constitution of this embodiment, as shown in Fig. 9, by inserting the left and right large-sized folded portions 52B1 of the screen 52 into a gap formed between the lens upper surface portion 61A of the headlight 51 and the rib 61G, the screen 52 and the headlight 51 are positioned. In this case, the large-sized folded portion 52B1 is fitted into the gap formed between the lens upper surface portion 61A and the rib 61G by way of a packing 83 formed using an elastic material. Accordingly, even when a size error occurs in the recessed engaging portion 61F or the large-sized folded portion 52B1 of the screen 52 at the time of performing resin molding, the size error can be absorbed by elastic deformation of the packing 83. Further, joining of the lens 61 and the housing 62 is performed by adhesion using an adhesive agent 62A, and the dried adhesive agent 62A functions as a seal.

Further, as shown in Fig. 12 and Fig. 5, the pair of left and right projecting portions 53T which projects frontwardly and is brought into contact with a back surface of the screen body 52A is formed on the lower end of the screen back-side panel 53. Accordingly, when the screen 52 is press-fitted into the recessed engaging portion 61F of the headlight 51, the projecting portions 53T of the screen back-side panel 53 are brought into contact with the back surface of the screen body 52A, and the back surface of the panel 53 is brought into contact with the panel pushing portion 61E formed on the flange portion 61D of the lens 61 and hence, the headlight 51, the screen 52 and the screen back-side panel 53 can be positioned.

In this manner, in the constitution of this embodiment, the folded portions 52B of the screen 52 are press-fitted into the recessed engaging portion 61F of the headlight 51 and the folded portions 52B of the screen 52 are pushed by the lower end of the screen back-side panel 53 and hence, a force for supporting the screen 52 can be sufficiently secured and, at the same time, the formation of a large gap formed between the folded portions 52B of the screen 52 and the screen back-side panel 53 can be avoided thus enhancing the appearance.

Further, in the constitution of this embodiment, as shown in Fig. 8 to Fig. 12, a lower portion of the screen back-side panel 53 is formed of a strip-shaped bulging portion 53B which bulges frontwardly along a lower edge of the screen 52 and hence, a section modulus of the lower portion of the panel 53 is increased whereby rigidity of the screen back-side panel 53 which pushes the screen 52 can be enhanced. Accordingly, the screen 52 can be pushed more firmly.

In adopting the constitution where the folded portion 52B of the screen 52 is pushed by the lower end of the screen back-side panel 53, there arises a possibility that water (rain water or water splashed at the time of car washing) which enters the gap SB formed between the screen back-side panel 53 and the screen 52 cannot be drained.

Particularly, in the constitution of this embodiment, the lower portion of the screen back-side panel 53 is formed into the strip-shaped bulging portion 53B which bulges frontwardly toward the screen 52, and the gap SB formed between a portion of the strip-shaped bulging portion 53B and a lower portion of the screen 52 is narrow. Accordingly, when water which enters the gap SB cannot be drained, as shown in Fig. 4, water (indicated by hatching α in Fig. 4) spreads covering a large area due to an action of surface tension or the like whereby water is liable to be observed from the outside.

Accordingly, in the constitution of this embodiment, the water drain passage 71 which is communicated with the gap SB formed between the screen back-side panel 53 and the screen 52 (see Fig. 5 to Fig. 7, Fig. 10) is formed in the folded portion 52B of the screen 52.

As shown in Fig. 5, the water drain passage 71 is formed in the pair of left and right large-sized folded portions 52B1 formed on the screen 52 respectively. To be more specific, each water drain passage 71 is a through hole which vertically penetrates each large-sized folded portion 52B1, and is formed into a notched hole shape where a front end 71A of the water drain passage 71 is communicated with the gap SB formed between the screen back-side panel 53 and the screen 52, and the water drain passage 71 linearly extends rearwardly from the front end 71A and a rear end 71B of the through hole opens on a back surface of the large-sized folded portion 52B1.

Accordingly, as shown in Fig. 10, the gap SB formed between the screen back-side panel 53 and the screen 52 is communicated with the gap SA formed between the screen 52 and the lens upper surface portion 61A of the headlight 51 by way of the water drain passage 71 and hence, as indicated by an arrow in Fig. 10, water in the gap SB can be discharged to the outside by way of the water drain passage 71.

Further, as shown in Fig. 6, the left and right water drain passages 71 are formed at corner positions corresponding to boundaries between the center light portion 51A and the left and right outer light portions 51B on the lens upper surface portion 61A. The horizontal upper surface portion 61B at the center light portion 51A is a horizontal surface which extends in the vehicle widthwise direction in a state where the motorcycle 1 assumes an upright state and hence, the left and right corner positions takes the lowest position of the gap SB formed between the screen back-side panel 53 and the screen 52 when the motorcycle 1 assumes an upright state. The left corner portion takes the lowest position of the gap SB during a period where the motorcycle 1 is inclined to the left at a predetermined angle (for example, approximately 30 degrees), and the right corner position takes the lowest position of the gap SB during a period where the motorcycle 1 is inclined to the right at a predetermined angle (for example, approximately 30 degrees). Particularly, the left corner position surely takes the lowest position in a state where the motorcycle 1 is inclined to the left using the side stand 30 on a planar ground.

In this manner, the water drain passage 71 which drains water which enters the gap SB downwardly is formed at the above-mentioned left and right corner positions (the left and right corner positions of the U-shaped opening portion 65) and hence, water which enters the gap SB can be discharged to the outside substantially without leaving water in the gap SB either in a state where the motorcycle 1 assumes an upright state or a state where the side stand 30 is used.

Further, as shown in Fig. 5, the left and right water drain passages 71 are provided at positions where the water drain passages 71 do not overlap the pair of left and right projecting portions 53T which projects frontwardly from the screen back-side panel 53 as viewed in a bottom view. Accordingly, water which enters the gap SB can be smoothly discharged to the outside without being obstructed by the pair of left and right projecting portions 53T.

Further, in the constitution of this embodiment, as shown in Fig. 6, a center portion of a lower edge of the screen back-side panel 53 is slightly curved upwardly between the pair of left and right folded portions 52B (position including the water drain passage 71) thus forming an upwardly projecting opening portion 73 which allows the space in front of the screen back-side panel 53 and the space behind the screen back-side panel 53 to be communicated with each other. By forming the upwardly projecting opening portion 73 between the pair of left and right folded portions 52B in this manner, while preventing the engaging portion between the screen 52 and the headlight 51 from being viewed from the outside by the screen back-side panel 53, water which enters the gap SB formed between the screen back-side panel 53 and the screen 52 can be discharged to the outside also through the upwardly projecting opening portion 73 thus enhancing water drain property.

As has been explained heretofore, in this embodiment, the lower edge of the screen back-side panel 53 is brought into contact with the folded portion 52B of the screen 52 and, at the same time, the water drain passage 71 which is communicated with the gap SB formed between the screen 52 and the screen back-side panel 53 is formed in the folded portion 52B and hence, a force for supporting the screen 52 can be enhanced by the screen back-side panel 53, an external appearance of the mating portion between the screen 52 and the screen back-side panel 53 can be improved, and water which enters between the screen back-side panel 53 and the screen 52 can be easily drained.

Further, the water drain passage 71 is formed adjacent to a portion of the folded portion 52B of the screen 52 which is engaged between the lens upper surface portion 61A and the ribs (engaging portions) 61G and hence, water drain property at the engaging portion between the screen 52 and the headlight 51 where water drainage becomes particularly difficult can be further enhanced.

Further, the screen 52 includes the pair of left and right large-sized folded portions 52B1, and the center portion of the lower edge of the screen back-side panel 53 is formed into an upwardly curved shape between the left and right large-sized folded portions 52B1 thus forming the upwardly projecting opening portion 73 which allows the space in front of the screen back-side panel 53 and the space behind the screen back-side panel 53 to be communicated with each other and hence, water drain property can be further enhanced while preventing the engaging portion between the screen 52 and the headlight 51 from being viewed from the outside.

Further, the left water drain passage 71 is formed at the lowest portion of the gap SB formed between the screen 52 and the screen back-side panel 53 in a state where the side stand 30 is used and hence, water can be efficiently drained in a parking state where the side stand 30 is used.

In addition, the left and right water drain passages 71 are provided on the boundaries between the horizontal upper surface portion 61B which is arranged horizontally in the vehicle widthwise direction on the lens upper surface portion 61A and the left and right inclined upper surface portions 61C which are inclined upwardly from the left and right sides of the horizontal upper surface portion 61B and hence, water can be efficiently drained either in a state where the motorcycle 1 assumes an upright state and a state where the motorcycle 1 assumes a leftwardly or rightwardly inclined state.

Further, the water drain passage 71 is formed of the through hole which vertically penetrates the folded portion 52B in a state where a portion of the through hole arranged directly below the gap SB formed between the screen 52 and the screen back-side panel 53 is set as a front end of the through hole and hence, it is possible to prevent the water drain passage 71 from being exposed to the front surface of the screen 52.

Still further, in this constitution, the lower portion of the screen back-side panel 53 has the strip-shaped bulging portion 53B which bulges frontwardly along the lower edge of the screen 52 and hence, rigidity of the screen back-side panel 53 which pushes the screen 52 can be enhanced thus supporting the screen 52 more firmly.

The above-mentioned embodiment merely exemplifies one mode of the present invention, and modifications and applications can be made arbitrarily without departing from the scope of the present invention as defined in the appended claims.

For example, in the above-mentioned embodiment, the water drain passage 71 is not limited to the above-mentioned shape, and hole portions and groove portions having various shapes are applicable to an extent that water in the gap SB formed between the screen 52 and the the screen back-side panel 53 can be drained.

Further, in the above-mentioned embodiment, the explanation has been made with respect to the case where the present invention is applied to the front part structure of the motorcycle 1 shown in Fig. 1. However, the present invention is not limited to the above-mentioned embodiment, and the present invention is widely applicable to the front part structure of saddle-ride-type vehicles. The saddle-ride-type vehicles include all types vehicles where a rider rides a vehicle body in a straddling manner, and include not only a motorcycle (including a bicycle with a prime mover) but also a three-wheeled vehicle or a four-wheeled vehicle which is classified into ATV (all terrain vehicles).

### [Description of Reference Numerals and Signs]

1: motorcycle (saddle-ride-type vehicle)
51: headlight
52: screen
52A: screen body
52B: folded portion
52B1: large-sized folded portion
53: screen back-side panel (panel member)
53B: strip-shaped bulging portion
61: lens
61A: lens upper surface portion
61B: horizontal upper surface portion
61C: inclined upper surface portion
61F: recessed engaging portion
61G: rib (engaging portion)
62: housing
63: light bulb (light body)
71: water drain passage

## Claims

1. A front part structure of a saddle-ride-type vehicle where the front part structure includes a headlight (51) where a light body (63) is housed between a lens (61) and a housing (62) and a screen (52) which is arranged adjacent to an upper edge of the headlight (51), a folded portion (52B) which is folded rearwardly is formed on a lower portion of the screen (52), and a panel member (53) is arranged above and adjacent to the folded portion (52B), wherein
a lower edge of the panel member (53) is brought into contact with the folded portion (52B) of the screen (52) and a gap (SB) is formed between the screen (52) and the panel member (53), **characterized in that** a water drain passage (71) which is communicated with the gap (SB) formed between the screen (52) and the panel member (53) is formed in the folded portion (52B).

2. The front part structure of a saddle-ride-type vehicle according to claim 1, wherein the folded portion (52B) of the screen (52)is engaged between a lens upper surface portion (61A) of the headlight (51) and an engaging portion (61G) which is arranged above the lens upper surface portion (61A) of the headlight (51) with a gap (SA) therebetween, and
the water drain passage (71) is formed adjacent to a portion of the folded portion (52B) which is engaged between the lens upper surface portion (61A) and the engaging portion (61G).

3. The front part structure of a saddle-ride-type vehicle according to claim 1 or 2, wherein the screen (52) includes a pair of left and right folded portions (52B1), and
a center portion of the lower edge of the panel member (53) is formed into an upwardly curved shape between the pair of left and right folded portions (52B1) thus forming an upwardly projecting opening portion (73) which allows a space in front of the panel member (53) and a space behind the panel member (53) to be communicated with each other.

4. The front part structure of a saddle-ride-type vehicle according to claim 2, wherein the lens upper surface portion (61A) includes a horizontal upper surface portion (61B) which is arranged horizontally in the vehicle widthwise direction in a state where the saddle-ride-type vehicle assumes an upright state, and left and right inclined upper surface portions (61C) which are inclined upwardly from left and right sides of the horizontal upper surface portion (61B), and
the water drain passage (71) is provided on boundaries between the horizontal upper surface portion (61B) and the inclined upper surface portions (61C).

5. The front part structure of a saddle-ride-type vehicle according to any one of claims 1 to 4, wherein the water drain passage (71) is formed of a through hole which vertically penetrates the folded portion (52B) in a state where an end of the through hole arranged directly below the gap (SB) formed between the screen (52) and the panel member (53) is set as a front end of the through hole.

6. The front part structure of a saddle-ride-type vehicle according to any one of claims 1 to 5, wherein a lower portion of the panel member (53) has a strip-shaped bulging portion (53B) which bulges frontwardly along a lower edge of the screen (52).

7. A saddle-ride-type vehicle having a front part structure according to any one of claims 1 to 6, wherein the saddle-ride-type vehicle includes a side stand (30),
and
the water drain passage (71) is formed at a lowest portion of the gap (SB) formed between the screen (52) and
the panel member (53) in a state where the side stand (30) is used.

## Patentansprüche

1. Vorderteilstruktur eines Sattelfahrzeugs, wobei die Vorderteilstruktur einen Scheinwerfer (51), in welchem ein Lichtkörper (63) zwischen einer Linse (61) und einem Gehäuse (62) aufgenommen ist, und eine Scheibe (52) umfasst, welche einem oberen Rand des Scheinwerfers (51) benachbart angeordnet ist, wobei ein umgefalteter Abschnitt (52B), welcher nach hinten umgefaltet ist, an einem unteren Abschnitt der Scheibe (52) gebildet ist, und ein Verkleidungselement (53) oberhalb des und benachbart zu dem umgefalteten Abschnitt (52B) angeordnet ist, wobei
ein unterer Rand des Verkleidungselements (53) in Kontakt mit dem umgefalteten Abschnitt (52B) der Scheibe (52) gebracht ist und ein Spalt (SB) zwischen der Scheibe (52) und dem Verkleidungselement (53) gebildet ist, **dadurch gekennzeichnet, dass**
ein Wasserablaufdurchgang (71), welcher mit dem zwischen der Scheibe (52) und dem Verkleidungselement (53) gebildeten Spalt (SB) in Verbindung steht, in dem umgefalteten Abschnitt (52B) gebildet ist.

2. Vorderteilstruktur eines Sattelfahrzeugs nach Anspruch 1, wobei der umgefaltete Abschnitt (52B) der Scheibe (52) zwischen einem oberen Flächenabschnitt der Linse (61A) des Scheinwerfers (51) und einem Eingriffsabschnitt (61 G), welcher oberhalb des oberen Flächenabschnitts der Linse (61A) des Scheinwerfers (51) angeordnet ist, mit einem Spalt (SA) da dazwischen eingegriffen ist, und
der Wasserablaufdurchgang (71) einem Abschnitt des umgefalteten Abschnitts (52B) benachbart gebildet ist, welcher zwischen dem oberen Flächenabschnitt der Linse (61A) und dem Eingriffsabschnitt (61G) eingegriffen ist.

3. Vorderteilstruktur eines Sattelfahrzeugs nach Anspruch 1 oder 2, wobei die Scheibe (52) ein Paar von linken und rechten umgefalteten Abschnitten (52B1) umfasst, und
ein zentraler Abschnitt des unteren Rands des Verkleidungselements (53) in einer aufwärtsgebogenen Form zwischen dem Paar von linken und rechten umgefalteten Abschnitten (52B1) gebildet ist, wobei er dadurch einen nach oben vorstehenden Öffnungsabschnitt (73) bildet, welcher einem Raum vor dem Verkleidungselement (53) und einem Raum hinter dem Verkleidungselement (53) erlaubt, miteinander in Verbindung zu stehen.

4. Vorderteilstruktur eines Sattelfahrzeugs nach Anspruch 2, wobei der obere Flächenabschnitt der Linse (61A) einen horizontalen oberen Flächenabschnitt (61 B), welcher in der Fahrzeugbreitenrichtung in einem Zustand, in dem das Sattelfahrzeug einen aufrechten Zustand einnimmt, horizontal angeordnet ist, und linke und rechte geneigte obere Flächenabschnitte (61 C) umfasst, welche von linken und rechten Seiten des horizontalen oberen Flächenabschnitts (61 B) nach oben geneigt sind, und
der Wasserablaufdurchgang (71) an Grenzen zwischen dem horizontalen oberen Flächenabschnitt (61 B) und den geneigten oberen Flächenabschnitten (61 C) vorgesehen ist.

5. Vorderteilstruktur eines Sattelfahrzeugs nach einem der Ansprüche 1 bis 4, wobei der Wasserablaufdurchgang (71) aus einem Durchgangsloch gebildet ist, welches den umgefalteten Abschnitt (52B) in einem Zustand vertikal durchsetzt, in dem ein Ende des Durchgangslochs, welches direkt unterhalb des zwischen der Scheibe (52) und dem Verkleidungselement (53) gebildeten Spalts (SB) angeordnet ist, als ein vorderes Ende des Durchgangslochs festgelegt ist.

6. Vorderteilstruktur eines Sattelfahrzeugs nach einem der Ansprüche 1 bis 5, wobei ein Unterabschnitt des Verkleidungselements (53) einen streifen-förmigen Wölbungsabschnitt (53B) aufweist, welcher sich entlang eines unteren Rands der Scheibe (52) nach vorne wölbt.

7. Sattelfahrzeug, welches eine Vorderteilstruktur nach einem der Ansprüche 1 bis 6 aufweist, wobei das Sattelfahrzeug einen Seitenständer (30) umfasst, und
der Wasserablaufdurchgang (71) an einem untersten Abschnitt des zwischen der Scheibe (52) und dem Verkleidungselement (53) gebildeten Spalts (SB), in einem Zustand, in dem der Seitenständer

## Revendications

1. Structure de partie avant d'un véhicule de type à selle dans laquelle la structure de partie avant comprend un phare (51) dans lequel un corps lumineux (63) est logé entre une lentille (61) et un boîtier (62) et un écran (52) qui est agencé de manière adjacente à un bord supérieur du phare (51), une partie pliée (52B) qui est pliée vers l'arrière, est formée sur une partie inférieure de l'écran (52), et un élément de panneau (53) est agencé au-dessus de et de manière adjacente à la partie pliée (52B), dans laquelle
un bord inférieur de l'élément de panneau (53) est amené en contact avec la partie pliée (52B) de l'écran (52) et un espace (SB) est formé entre l'écran (52) et l'élément de panneau (53), **caractérisée en ce qu'**un passage de drain d'eau (71) qui communique avec l'espace (SB) formé entre l'écran (52) et l'élément de panneau (53) est formé dans la partie pliée (52B).

2. Structure de partie avant d'un véhicule de type à selle selon la revendication 1, dans laquelle la partie pliée (52B) de l'écran (52) est mise en prise entre une partie de surface supérieure de lentille (61A) du phare (51) et une partie de mise en prise (61G) qui est agencée au-dessus de la partie de surface supérieure de lentille (61A) du phare (51) avec un espace (SA) entre elles, et
le passage de drain d'eau (71) est formé de manière adjacente à une partie de la partie pliée (52B) qui est mise en prise entre la partie de surface supérieure de lentille (61A) et la partie de mise en prise (61G).

3. Structure de partie avant d'un véhicule de type à selle selon la revendication 1 ou 2, dans laquelle l'écran (52) comprend une paire de parties pliées gauche et droite (52B1), et
une partie centrale du bord inférieur de l'élément de panneau (53) est formée selon une force incurvée vers le haut entre la paire de parties pliées gauche et droite (52B1), formant ainsi une partie d'ouverture en saillie vers le haut (73) qui permet à un espace en face de l'élément de panneau (53) et à un espace derrière l'élément de panneau (53) de communiquer entre eux.

4. Structure de partie avant d'un véhicule de type à selle selon la revendication 2, dans laquelle la partie de surface supérieure de lentille (61A) comprend une partie de surface supérieure horizontale (61B) qui est agencée horizontalement dans le sens de la largeur du véhicule dans un état dans lequel le véhicule de type à selle adopte un état droit, et des parties de surface supérieure inclinées gauche et droite (61C) qui sont inclinées vers le haut à partir des côtés gauche et droit de la partie de surface supérieure horizontale (61B), et
le passage de drain d'eau (71) est prévu sur des limites entre la partie de surface supérieure horizontale (61B) et les parties de surface supérieure inclinées (61C).

5. Structure de partie avant d'un véhicule de type à selle selon l'une quelconque des revendications 1 à 4, dans laquelle le passage de drain d'eau (71) est formé avec un trou débouchant qui pénètre verticalement dans la partie pliée (52B) dans un état dans lequel une extrémité du trou débouchant agencée directement au-dessous de l'espace (SB) formé entre l'écran (52) et l'élément de panneau (53) est déterminée comme étant une extrémité avant du trou débouchant.

6. Structure de partie avant d'un véhicule de type à selle selon l'une quelconque des revendications 1 à 5, dans laquelle une partie inférieure de l'élément de panneau (53) a une partie renflée (53B) en forme de bande qui est renflée vers l'avant le long d'un bord inférieur de l'écran (52).

7. Structure de partie avant d'un véhicule de type à selle selon l'une quelconque des revendications 1 à 6, dans laquelle le véhicule de type à selle comprend un support latéral (30), et
le passage de drain d'eau (71) est formé au niveau de la partie la plus basse de l'espace (SB) formée entre l'écran (52) et l'élément de panneau (53) dans un état dans lequel le support latéral (30) est utilisé.
